# EUROPEAN PATENT SPECIFICATION

(11) **EP 1 177 515 B1**
(45) Date of publication and mention of the grant of the patent: **05.11.2003**
(21) Application number: 00901410.1
(22) Date of filing: 13.01.2000
(51) Int. Cl.: G06F 17/60

(54) **METHOD AND APPARATUS FOR PROCESSING BUSINESS INFORMATION FROM MULTIPLE ENTERPRISES**
VERFAHREN UND APPARAT ZUM VERARBEITEN VON GESCHÄFTSINFORMATIONEN AUS MEHREREN UNTERNEHMEN
PROCEDE ET DISPOSITIF POUR TRAITER LES INFORMATIONS COMMERCIALES DE PLUSIEURS ENTREPRISES

(30) Priority: 15.01.1999 US 231819
(43) Date of publication of application: 06.02.2002
(73) Proprietor: Harmony Software, Inc., San Mateo, CA 94401-3908 (US)
(72) Inventor: GARDEPE, Carla E., Foster City, CA 94404 (US); GARDEPE, E. Brian, Foster City, CA 94404 (US)
(74) Representative: Beresford, Keith Denis Lewis
(86) International application number: US0000728
(87) International publication number: WO00042553

(56) References cited:
- US-A- 5 781 911
- US-A- 5 794 246
- BONTEMPO C ET AL: "THE IBM DATA WAREHOUSE ARCHITECTURE" COMMUNICATIONS OF THE ASSOCIATION FOR COMPUTING MACHINERY,US,ASSOCIATION FOR COMPUTING MACHINERY. NEW YORK, vol. 41, no. 9, September 1998 (1998-09), pages 38-51, XP000791963 ISSN: 0001-0782
- ECKERSON W W: "The case for the datamart" DATABASE AND NETWORK JOURNAL,GB,A.P. PUBLICATIONS, LONDON, vol. 27, no. 5, October 1997 (1997-10), pages 10-12, XP002102749 ISSN: 0265-4490
- GARDNER S R: "THE QUEST TO STANDARDIZE METADATA" BYTE,US,MCGRAW-HILL INC. ST PETERBOROUGH, vol. 22, no. 11, 1 November 1997 (1997-11-01), pages 47-48, XP000728722 ISSN: 0360-5280
- CHAUDHURI S ET AL: "An overview of data warehousing and OLAP technology" SIGMOD RECORD,US,ASSOCIATION FOR COMPUTING MACHINERY, NEW YORK, vol. 26, no. 1, March 1997 (1997-03), pages 65-74, XP002115173
- DETBYSHIRE M H: "AN ARCHITECTURE FOR A BUSINESS DATA WAREHOUSE" THE ICL SYSTEMS JOURNAL,GB,INTERNATIONAL COMPUTERS LIMITED, vol. 11, no. 1, 1 May 1996 (1996-05-01), pages 23-47, XP000631249 ISSN: 1364-310X
- SQUIRE C: "Data extraction and transformation for the data warehouse" ACM PROCEEDINGS OF SIGMOD. INTERNATIONAL CONFERENCE ON MANAGEMENT OF DATA,XX,XX, vol. 24, no. 1, 1 March 1995 (1995-03-01), pages 446-447, XP002091745

## Description

### BACKGROUND OF THE INVENTION

### Field of the Invention

This invention generally relates to database systems for computers and more particularly to a method and apparatus for processing business information from multiple enterprises.

### Description of the Related Art

In recent years, businesses have focused on creating information systems to analyze business operations and increase profitability. These information systems access business related information stored in a collection of databases called a data warehouse. The business information in the data warehouse includes data on a wide range of business activities such as inventory, sales records, shipping costs, account receivables, and employee salaries. Data warehousing was a first attempt to make the vast amount of information associated with running a business available for analysis and study.

Even though the data warehouse makes information available, many managers and executives have difficulty applying this vast amount of information to everyday business needs. Often, the volume of data in most data warehouses simply overwhelms the average business user. Consequently, managers, executives, and others must rely on specially trained analysts to sort through information in the data warehouse. Even the analysts may rely on special software tools and techniques to sort through the data warehouse and produce information useful to a business.

Data marts were created to help deal with the vast amount of information found in data warehouses. The data mart improved data warehousing by grouping portions of a data warehouse into logical subsets of information. This reduced the amount of information presented to managers and executives and made the information easier to manage. Using the data mart, a manager or executive could use focus on information related to a particular product or service being analyzed rather than the information related to all products or services provided by a company. Bontempo C. et al: "The IBM Data Warehouse Architecture" Communications of the Association for Computing Machinery, US, Association for Computing Machinery, New York, Vol 41, No. 9, September 1998 (1998-09), pages 38-51, XP000791963, ISSN:0001-0782 discloses a conventional data processing architecture comprising receiving information from a plurality of sources and storing received data in a standardised form in a central database referred to as a data warehouse. In order to aid the accessing of data within the data warehouse, a number of smaller databases referred to as "data marts" are also provided. These data marts contain selected subsets of the data stored within the larger data warehouse.

Many business people continue to have difficulties accessing and using information stored using the data warehouse and data mart technologies. First, data warehouses and data marts do not analyze information and provide users with results for making business decisions. Even with the data mart, the users must analyze information contained in these storage areas and generate their own conclusions. Consequently, many managers and executives either train themselves quickly or rely on trained analysts to analyze the information.

Second, existing data warehouse and data mart technologies are limited to information from a single enterprise rather than a combination of multiple enterprises. In most cases, business information collected by a single enterprise (i.e. an independent business unit) cannot be shared with other enterprises because their information systems and software collecting the information is incompatible. For example, enterprises may use different enterprise resource planning (ERP) systems developed by different vendors such as Baan, Oracle, SAP, and PeopleSoft to collect business information. These incompatibilities restricts the business information to a single enterprise and limit the type of analysis that can be done. For example, without access to the information systems for a sales organization of a company, the manufacturing division of the company would not be able to analyze order requirements based on recent sales.

Moreover even when compatible information systems and software are used, there may be sensitive or proprietary information an enterprise may not want to share with other enterprises. For example, a supplier of a raw materials may not want to indicate to a buyer of the raw material the markup on the material they are charging the buyer. Current information systems are not designed to limit sharing of business information in this manner.

Accordingly, there is a need to share business information generated from multiple enterprises and provide analysis that can be used in businesses.

### SUMMARY OF THE INVENTION

In accordance with the present invention, as embodied and broadly described herein, a method for processing business information generated by multiple enterprises. Initially, a data warehouse is provided that has the capability of holding business information. The data warehouse is populated with business information received from a first enterprise and a second enterprise. The business information is associated with the first and second enterprise based upon a set of standardized categories used in the data warehouse. Metastore information describing the organization of business information in the data warehouse is used to develop rules for extracting a portion of the business information from the data warehouse. This portion of business information extracted from the data warehouse is then stored in a data mart. Using at least one such data mart, a multiple dimension database is created wherein each dimension of the multiple dimension database corresponds to variables derived from business rules established in an industry. Using the multiple dimension database, metrics for measuring business performance from the multiple dimension databases are then generated.

In another aspect of the present invention, a method for generating metric values for evaluating business performance from the business information of multiple enterprises is provided. Initially, business information from a first and a second enterprise is received into a data warehouse in accordance with a set of standardized categories. Next, a portion of the business information is extracted from the data warehouse and stored in at least one data mart. Using one or more data marts, a multiple dimension database is created wherein each dimension of the multiple dimension database corresponds to at least one variable derived from business rules established in an industry. These multiple dimension databases are then used to generate metrics for measuring business performance.

### BRIEF DESCRIPTION OF THE DRAWINGS

The accompanying drawings, which are incorporated in and constitute a part of this specification, illustrate an implementation of the invention and, together with the description, serve to explain principles of the invention.

### IN THE DRAWINGS:

FIG. 1 is a block diagram representation of multiple enterprises sharing information in accordance with one implementation of the present invention;
FIG. 2 is a block diagram of metastorage server implemented consistent with the present invention and used to facilitate the exchange of business information;
FIG. 3 is a block diagram representation of a transform module designed in accordance with one implementation of the present invention;
FIG. 4 is a block diagram representation of metadata tools designed in accordance with one implementation of the present invention;
FIG. 5 is a block diagram of data mart modules designed in accordance with one implementation of the present invention;
FIG. 6 is a block diagram of metric modules used to generate business performance metrics in accordance with one implementation of the present invention;
FIG. 7 is a flowchart of the method steps associated with generating business performance metrics from multiple enterprises in accordance with one implementation of the present invention;
FIG. 8 is a block diagram representation of the user interface generated in accordance with one implementation of the present invention;
FIG. 9 is a block diagram representation of the organization selection portion of the user interface as depicted in FIG. 8;
FIG. 10 is a block diagram representation of the location selection portion of the user interface as depicted in FIG. 8;
FIG. 11 is a block diagram representation of the supply chain and the demand chain of the user interface as depicted in FIG. 8; and
FIG. 12 is a flowchart of the method steps associated with creating the supply and demand chain from multiple enterprises in accordance with one implementation of the present invention.

### DETAILED DESCRIPTION

Reference will now be made in detail to an implementation of the present invention as illustrated in the accompanying drawings. The same reference numbers will be used throughout the drawings in the following description to refer to the same or like parts.

### MULTIPLE ENTERPRISE SYSTEM

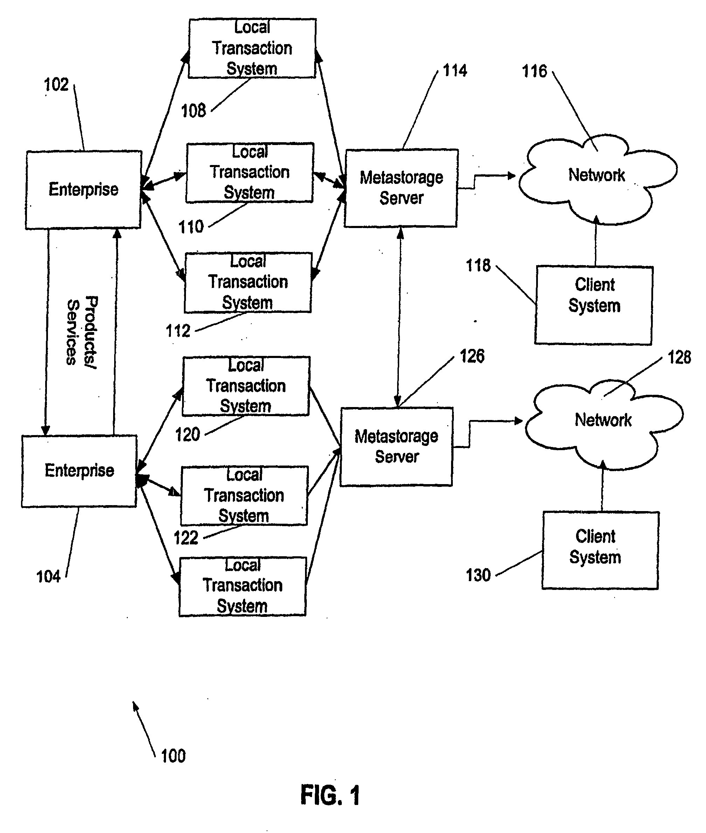

FIG. 1 is a block diagram representation of multiple enterprises sharing information in accordance with one implementation of the present invention. The enterprise, in this context, can be any independent business entity that supplies or uses a product or service from another business entity. These enterprises may be part of a larger corporation or may be separate business organizations. By sharing business information, each enterprise can measure their business performance in light of the business information from other enterprises. This can help make more accurate business forecasts in markets where the supply and demand for products or services varies rapidly.

Multiple enterprise configuration 100 includes enterprise 102 and enterprise 104. Enterprises 102 and 104 may exchange products and services in the normal course of business. For example, enterprise 102 may provide products to enterprise 104 and utilize services provided by enterprise 104. Enterprise 104 may modify or improve products generated by enterprise 102 and send them to other enterprises for further processing. Enterprise 102 is considered to be part of a supply chain of enterprises or simply the supply chain because enterprise 102 is supplying products and services to enterprise 104. Similarly, enterprise 104 is considered to be part of the demand chain of enterprises or the demand chain because enterprise 104 demands products or services from enterprise 102. The supply chain and demand chain are discussed in further detail below in conjunction with operation of the user interface. Further, although only two enterprises are illustrated in FIG. 1, implementations of the present invention can be adapted to work with any number of enterprises.

In FIG. 1, enterprise 102 is operatively connected to local transaction system 108, local transaction system 110, local transaction system 112, metastorage server 114, network 116, and client system 118. Similarly, enterprise 104 is operatively connected to a local transaction system 120, a local transaction system 122, a local transaction system 124, a metastorage server 126, a network 128, and a client system 130. Communication between metastorage server 126 and metastorage server 114 facilitates the sharing of business information generated by enterprise 104 and enterprise 102, respectively.

Enterprise 102 generates business information collected by local transaction system 108, local transaction system 110, and local transaction system 112. These local transaction systems use computer systems running software such as enterprise resource planning (ERP) software designed to collect business information associated with the respective enterprise. For example, the ERP software may collect information such as manufacturing data, information on the supply of raw materials, sales information, and inventory control from the enterprise.

Information systems associated with enterprise 104 operate in a similar manner to the information systems associated with enterprise 102. That is, local transaction systems are used to collect business information about the enterprise. For example, local transaction system 120 may be used to collect business information related to manufacturing while local transaction system 122 may be used to collect business information associated with inventory. Unfortunately, the local transaction systems associated with enterprise 104 may execute different software than the local transaction systems associated with enterprise 102 and consequently may produce information that is incompatible across the software systems. Even within the same enterprise, such as enterprise 104, local transaction system 120 may execute software that is incompatible with software executing on local transaction system 122. This incompatibility between software systems could arise if some local transaction systems executed ERP software developed by BAAN/SAP while other local transaction systems executed software developed by Oracle or People Soft.

Metastorage server 126 combines the business information from these aforementioned local transaction systems with business information from enterprise 102 using metastorage server 114. For example, sharing business information allows managers and executives associated with enterprise 104 to carefully monitor information on product and services supplied by enterprise 102. Similarly, managers and executives at enterprise 102 can track the demand for goods and services from enterprise 104 to assist in managing their manufacturing and production processes as well.

Metastorage server 114 and metastorage server 126 use meta-information to describe the organization of data in each of the local transaction systems and solve the incompatibilities between the systems. The meta-information maps data categories in each local transaction system to standard categories describing products, services, and other business information. These standard categories then enable metastorage server 114 and metastorage server 126 to access and extract information from local transaction systems executing different software applications. The combined information is used to generate databases, data warehouses, and data marts in accordance with the present invention. In addition, the metastore servers also use meta-information to generate metrics for measuring business performance.

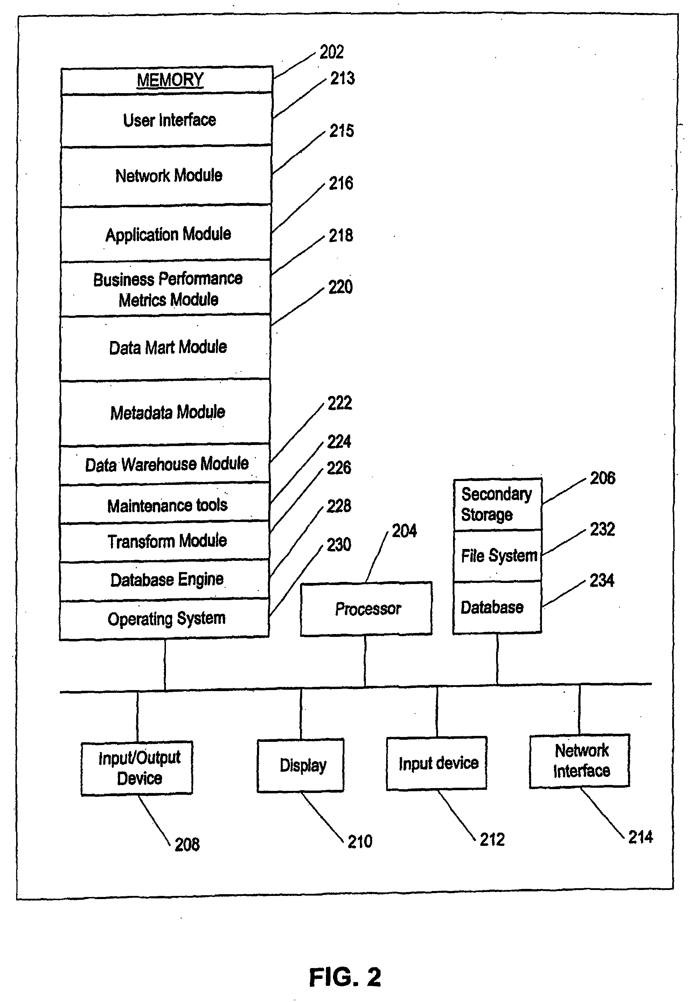

FIG. 2 is a block diagram of metastorage server 114 designed in accordance with one implementation of the present invention. Metastorage server 114 includes a memory 202, a processor 204, a secondary storage 206, an input/output device 208, a display 210, an input device 212, and a network interface 214. Processor 204 can be a central processor unit (CPU) capable of executing the instructions associated with software modules stored in memory 202. Processor 204 may also be implemented as an application specific integrated circuit (ASIC) designed to execute processes implemented in accordance with one embodiment of the present invention such as those stored in memory 202.

Secondary storage 206 is a storage area such as a hard disk or cache memory having a file system 232 and a database 234. File system 232 can be used to store files and other data usually associated with operation of metastorage server 114. Likewise, databases 234 includes libraries and application programming interfaces (API) useful in developing databases and extracting data from the databases. Input/output device 208 may include scanners, printers, and mass storage devices such as tape drives. Display 210 includes any display device capable of displaying information such as a monitor, a television, or a liquid crystal display (LCD). Input device 212 can be used to control operation of metastorage server 114 and may include a keyboard, a mouse, a keyboard and mouse combination, and voice recognition input systems. Network interface 214 connects metastorage server 114 to a network such as the Internet and provides a communication protocol suitable for transmitting information.

Memory 202 includes an operating system 230, a database engine 228, a transform module 226, metadata tools 224, a data warehouse module 222, a metadata module 221, a data mart module 220, a business performance metrics module 218, an application module 216, a network module 215, and a user interface 213. Operating system 230 schedules execution of software modules in memory 202 on processor 204 and manages other computer resources associated with metastorage server 114. Database engine 228 processes database requests using database languages such as structured query language (SQL) and accesses data stored in database 234. In one implementation, database engine 228 communicates with database 234 using industry standard relational database management system (RDBMS) software. Alternatively, database engine 228 and database 234 may utilize object-oriented protocols.

### TRANSFORM MODULE

Transform module 226 acquires business information from local transactions systems running databases and software applications such as ERP software. For example, metastorage server 114 initially uses transform module 226 to extract information from ERP systems according to the particular ERP system design. SQL statements and templates are used to describe the data structures in the different ERP systems and control the extraction of business information. A template contains the names, descriptions, and data types of every data element in the abstract file. A template for an inventory system, such as an inventory system designed by BAAN or SAP, may map each of the tables and fields used in the inventory system to a neutral format data file. The neutral format data file contains standardized row-and-column database tables compatible with databases 234 and database engine 228.

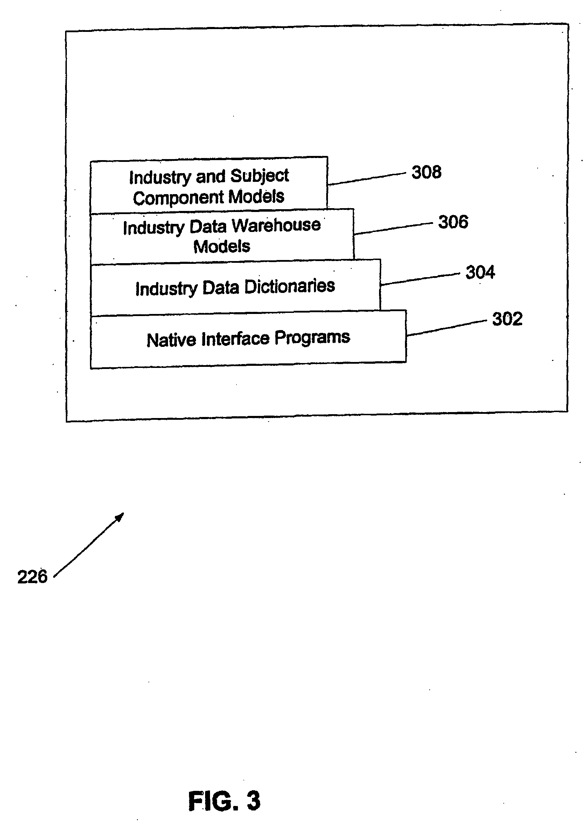

FIG. 3 is a block diagram illustrating software modules associated with transform modul 226. Transform module 226 includes native interface programs 302, industry metadata dictionaries 304, industry data warehouse models 306, and industry and subject component models 308.

Native interface programs 302 are compatible with the application programming interfaces (APIs) for the different software applications executing on the local transaction systems within an enterprise. These native interface programs 302 can extract information from the databases and software applications executing on the local transaction systems. For example, native interface program 302 may use database macros and SQL routines proprietary to a specific database or ERP system to extract the name, birth date, address, social security number and other information stored on the system.

Data associated with native interface programs 302 are then transformed into a neutral data format for further processing. The neutral data format defines proprietary database structures, data types, and data fields from different transaction systems into a single set of database structures, data types, and data fields. Industry data dictionaries 304 provide a set of standard industry definitions to map between the data in a software application and this neutral data format. By adopting a standard way of describing business information, enterprises can exchange information about their business in a uniform manner. For example, these dictionaries are used to map proprietary field entries of an ERP system into standard definitions and terms. Advanced Data Resource Management (ADRM) is one data dictionary developed for a wide range of industries to define products, services, and terms used in each industry and may include up to as many as 8,000 definitions. ADRM is available from Harmony, Inc., 107 South B Street, San Mateo, California 94401.

Industry data warehouse model 306 describes the database tables and structure for storing business information in a data warehouse once it has been extracted and transformed to a neutral format. These industry data warehouse models 306 use specific entries from industry data dictionaries 304 to create the database tables, indices, and other database structures for the data warehouse.

Industry and subject component model 308 describe those portions of the database structure that are shared between different industries and those portions of a database that are shared within an industry. Specifically, a subject component model describes the common database structures used in a single industry. In contrast, industry component models are database structures that are common between different industries. For example, portions of a database designed to hold sales and marketing information would use industry component models since many industries have sales and marketing organizations. However, portions of a database designed to hold regulatory procedures for the pharmaceutical industry would use subject component models since other industries, such as the electronics industry, do not require such information.

### MAINTENANCE TOOLS

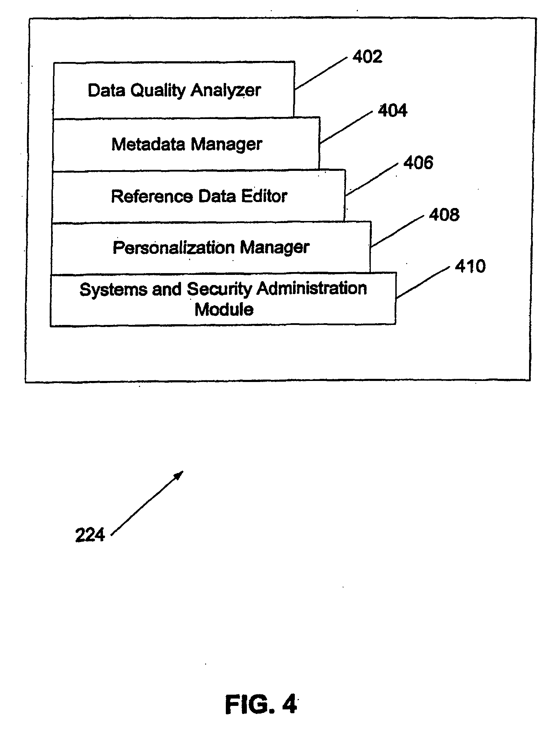

Referring to FIG. 2, maintenance tools 224 are used to manage user accounts and business information extracted from various local transaction systems. Maintenance tools 224, represented by the block diagrams in FIG. 4 include a data quality analyzer 402, and a metadata manager 404, a reference data editor 406, a personalization manager 408, and a systems and security administration module 410.

Data quality analyzer 402 analyzes business information extracted from the local transaction system in accordance with validation rules and generates a list of nonconforming records. A system administrator is responsible for correcting errors that may exist in these nonconforming records. For example, validation rules in data quality analyzer 402 may search for records with null entries or empty values and flag them to the system administrator as record requiring modification. Because null values may not be allowed in a given record, the system administrator may need to enter valid data to correct the records in the database.

Metadata manager 404 allows the system administrator to manage information extracted from the local transaction systems in the multiple enterprises. For example, metadata manager 404 can be used to modify how information stored in a local transaction system for an enterprise is converted to corresponding entries in databases 243. This can be used to make customized mappings between databases or adjust weights and measurements for transactions made between different countries.

To modify data extracted from the local transaction systems, the system administrator uses a reference data editor 406. Reference data editor 406 provides access and editing capabilities to information in a structured format. For example, reference data editor 406 allows the system administrator to directly edit information stored in records as well as modify relationships between records in the database.

Personalization manager 408 customizes the display of information made to a manager or executive accessing metastorage server 114. Personalization can be done based on the manager or executive's role in a company or the persons specific preferences. For each role in a company certain business information may be displayed or restricted from display as determined by the system administrator. This enables people working in the different roles in the company to focus on business information that most directly affects their underlying responsibilities. It also can be used to limit sensitive information such as financial summaries to those people entrusted to manage financial aspects of a business. For example, a person serving as the vice president in a company may receive revenue forecast metrics, inventory in transit metrics, and total inventory metrics on a display screen. Other information not directly related to a vice president's responsibilities may be restricted or eliminated from being displayed on the vice president's display screen. By controlling information in this manner, metric values, business reports, and other information can uniformly be distributed throughout the company to various managers based upon their position and responsibilities in the organization.

in addition to their role, each person in the company may also have information displayed based on their individual requirements. This type of personalization allows the user to specify personal preferences such as language, currency, and time zone when information is being generated on a display screen. For example, a vice president of finance can further personalize his information requesting display of information in English, using United States dollar currency and in the United States Central Standard Time zone.

Systems and security administration 410 is used to control access to business information generated by metastore server 114. Like personalization, security administration is based upon a user's role in a company. Security includes an authentication and an authorization process. Initially, the user must authenticate that they are a valid user by entering a valid user ID and password combination. An authenticated user is then authorized to access business information based on the role established for him by the system administrator.

A user's authorization is established as part of the configuration process when setting up metastorage server 114. The authorization process allows certain users to access certain types of information depending upon their role in the company. For example, a vice president of worldwide manufacturing may have access to all revenue models generated worldwide for the company. In contrast, a vice president of manufacturing responsible for only a particular country may only be authorized to access business information related to manufacturing in that corresponding country.

### DATA WAREHOUSE MODULE

Referring to FIG. 2, data warehouse module 222 represents the database used to store the business information collected from local transaction systems used in the multiple enterprises. Although the information in data warehouse module 222 may be too detailed for average users, is quite useful for deriving smaller databases such as data marts or generating metrics for measuring business performance. Each of these derivatives, which are discussed in further detail below, are more useful to high-level users such as business managers and executives. In accordance with the present invention, information in data warehouse module 222 is used to create more refined information such as data marts or metrics that users can use more easily.

### METADATA MODULE

Metadata module 221 includes information used to describe the format and structure of information stored in data warehouse module 222, data mart module 220, and business performance metrics module 218. Any information used to describe other information can be classified as metadata and may be included in metadata module 221. This includes information that defines units of measure, security information, authentication and authorization methods for different user roles, and the design of different databases. Metadata module 221 can also include information on generating data mart module 220 from data warehouse module 222 and metrics module 218 from information in data mart module 220. Further, information in metadata module 221 may also depend on the particular industry and the way information is organized within the particular industry. For example, metadata module 221 may describe information in the pharmaceutical industry using metric weights and measurements and describe information in the United States automotive industry using English weights and measurements. Details on data marts and metrics are described in further detail below.

### DATA MART MODULE

Data mart module 220 provides a subset of information in data warehouse module 222 that relates to a particular product or service provided by enterprise 102. This subset of information from data warehouse module 222 used to generate data mart module 220 is more easily searched and provides faster results. Metadata information in metadata module 221 includes rules for generating the desired data mart module 220 from information stored in a data warehouse for a given industry. For example, metadata information can be used to create a data mart that lists the capital equipment and corresponding costs for creating a semiconductor chip. The metadata information in metadata module 221 would assist in identifying all capital equipment used to create the semiconductor chip using the business information stored in data warehouse module 222 from multiple enterprises. By consolidating and summarizing information stored in data warehouse module 222 into data mart module 220, users can focus on specific information, analyze the relevant variables, and ignore information unrelated to the particular analysis.

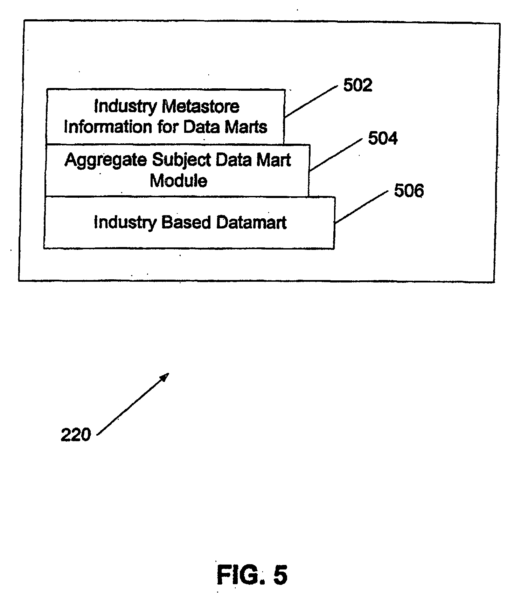

FIG. 5 provides a block diagram of the elements within data mart module 220. Data mart module 220 includes industry metastore information for data marts 502, aggregate subject datamart models 504, and an industry based data mart 506. To create the data mart, industry-based metastore information for data marts 502 indicates which fields in the data warehouse should be extracted for consolidation. Although described as part of data mart module 220, industry metastore information for data marts 502 could also be associated with metadata module 221 since it contains information used to describe other information.

Aggregate subject datamart models 504 indicates which field selected from the data warehouse can be combined together and presented as a single value. For example, aggregate subject datamart models 504 may be used to summarize sales revenue by region, product line, or division. By reducing worldwide sales to region, a business manager could quickly determine which regions in a business were producing more revenue than other regions. Similar analysis could be applied to a specific product line in a company or division within a company. The result of this process, creates industry-based data marts 506 containing summarized information originally contained in the data warehouse.

### BUSINESS PERFORMANCE METRICS MODULE

Business performance metric module 218 provides benchmark measurements for the performance of a business. These benchmarks are tailored to the particular industry and are generated from the consolidated business information stored in data mart module 220 and, in some cases, from data warehouse module 222. Metrics within business performance metrics module 218 are tailored to meet the individual needs of managers and executives and correspond to their role in the organization. For example, one metric useful in the high volume low profit margin electronics business relates to inventory turnover of materials. By tracking the inventory turnover metric, executives or business managers can readily manage the costs for keeping inventory, reduce the costs of goods sold, and improve profits.

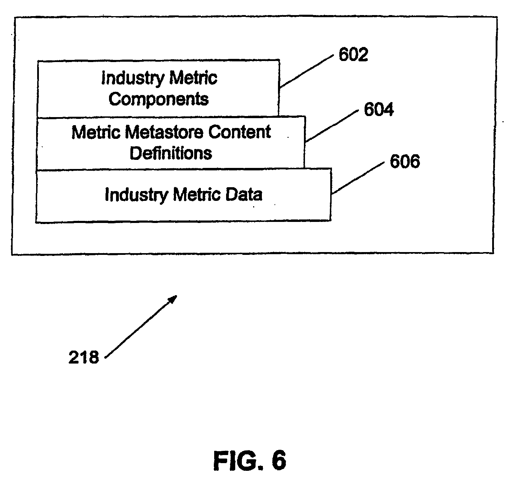

FIG. 6 is a block diagram of components used in the business performance metric modul 218. Business performance metric module 218 includes industry metric components 602, metric metastore content definitions 604, and industry metric data 606. Industry metric components 602 are standards set up in the industry for measuring performance of businesses in the industry. For example, industry metric components 602 in the pharmaceutical industry includes standards for measuring tested purity of drugs and overall quality as set up by the pharmaceutical standards group or regulatory agencies such as the Federal Drug Administration (FDA). For auditing and accounting purposes, industry metric components 602 may include metrics derived from well-known accounting and auditing standards such as generally acceptable accounting principles (GAAP). Other metrics may be derived from standards or rules developed by consortiums, regulatory industry organizations, or governmental bodies such as the Institute of Electrical and Electronic Engineers (IEEE), American Production and Inventory Control Society (APICS), the Securities Exchange Commission (SEC), and the Internal Revenue Services.

Metric metastore content definitions 604 describes which information in the data mart should be used to generate appropriate metric information. Essentially, metric meta store content definition 604 assists in extracting information from the data mart. For example, metric meta store content definition 604 could tell the system to extract business information on a product and all the different equivalents of the product being manufactured at different locations in the world. In the case of a product like aspirin, metric meta store content definition 604 would be used to identify the different names for aspirin in different countries, collect information on each named product, and generate appropriate metrics for managing the manufacture and other aspect of the product. Once information is gathered, the necessary metric values are generated for the industry and collected in industry metric data 606 for further analysis. Typical industry metric data 606 may include information such as revenue forecasts, total inventory on hand, and inventory in transit.

Although described as part of data mart module 220, industry metastore information for data marts 502 could also be associated with metadata module 221 since it contains information used to describe other information.

### APPLICATION MODULE

Referring to FIG. 2, application module 216 organizes information for display and presentation on display 210. Application module 216 acts as a layer between the actual user interface and various portions of the database and displays information tailored to a person's role in a business and personal preferences. As previously discussed, a person's role in a business dictates how much or little business information they are allowed to view. With respect to personal preferences, application module 216 may include a preferred language, currency, and time zone.

### NETWORK MODULE

Network module 215 transports business performance metrics, graphics and other information over a network to a manager or executive's desktop. This information is secured an encrypted to keep information confidential when transmitted over the network. Network module 215 may use a conventional Internet server such as the Apache server, an extensible markup language (XML) based server, an E-commerce server such as the Commerce Interchange Pipeline (CIP), Electronic Data Interchange (EDI) server or other similar network based servers.

### DATAMARTS AND METRICS FROM MULTIPLE ENTERPRISES

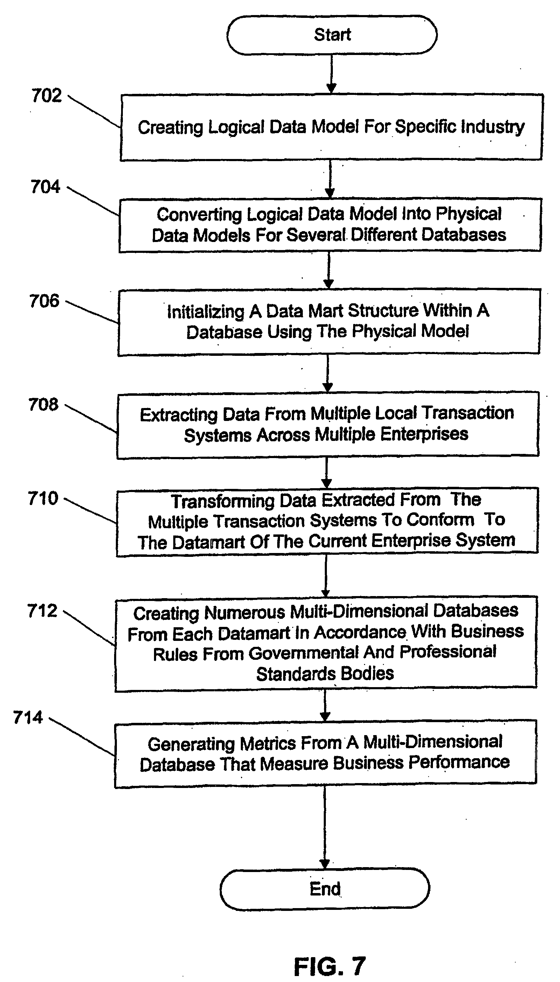

FIG. 7 is a flowchart diagram indicating the steps associated with creating data marts and metric values from the data warehouse information associated with one or more enterprises. Initially, a logical data model is created for the particular industry being studied (step 702). The logical data model includes all the names, descriptions, and data types of data elements required to describe business information in the particular industry. Logical data models may also describe how information is organized in a data file, the file naming convention used to store the data file on the computer, and the frequency for collecting information. Although each industry has a different logical model, certain portions of the logical data model may be shared or reused if several industries track similar types of information. For example, portions of the logical module related to marketing and sales may be shared between a wide range of industries.

For example, the categories information described in logical data models can be defined using industry data dictionaries 304 in FIG. 3. These definitions categorize and standardize products and services in a particular industry to facilitate uniform implementation of databases and information systems. Enterprises adopting appropriate industry data dictionaries 304 can later exchange business information with each other. ADRM dictionaries, discussed above, are one type of industry data dictionaries 304 useful for describing the logical data models for an industry.

The logical data model is then converted into physical data models for different types of databases (step 704). For example, the logical data model can be used to generate different database schema programs for different relational database management systems (RDBMS) such as Oracle, Informix, Sybase, or Ingres. The database schema program uses database commands based on structured query language (SQL) and various programming languages to describe the organization and structure of a database. Different database schemas are generated because each RDBMS system may use different commands and syntax to create related database structures. In accordance with the present invention, industry data warehouse models 306 in FIG. 3 are used to create the structures within a database that hold a data warehouse and includes both the logical and physical data models discussed above.

A derivative of the physical data models are then used to create the structures within the database for a data mart (step 706). The data mart may consolidate information stored in the data warehouse or may contain a subset of information contained in the data warehouse. Accordingly, database programs using SQL and other programming languages use portions of the physical data model to generate the structure for data marts in the database.

For example, the initial physical model is created by invoking a database application from a normalized schema. In accordance with the present invention, the normalized schema creates tables, fields, and data types corresponding to the data warehouse. A star schema is used to derive the data mart structure from the data warehouse. A fact table generated by the star schema includes selected dimensions from the data warehouse and partially consolidated information useful in the multi-dimensional data mart. Surrounding the fact table, thus forming a star, are selected tables from the data warehouse having the information used in the data mart. The star schema facilitates viewing multiple dimensions of a database from different perspectives. For example, a star schema can be used to derive a fact table having primary keys corresponding to a product table, a supplier table, and a purchase order table. The fact table thus facilitates viewing permutations of information along any of these dimensions or fields within each dimension. A product based view could display each product and the corresponding manufacture dates, geographic information or corporate organizations associated with the product.

Once the data warehouse and data mart structures are created, business information from the local transaction systems associated with multiple enterprises is extracted and stored in a data warehouse (step 708). In this context, an enterprise can be any independent business unit collecting business information that cannot be shared directly with another enterprise. Local transaction systems can be associated with enterprises from different companies or enterprises corresponding to the subdivisions with a single corporate entity. In accordance with the present invention, native interface programs 302 in FIG. 3 can be used to access the local transaction systems associated with these different enterprises. These native interface programs 302 include the appropriate database commands and applications necessary to extract information from different databases and ERP systems developed by vendors such as Oracle, Informix, BAAN, SAP, and PeopleSoft.

Business information is then extracted from the data warehouse and stored within the structure of data mart 506 (step 710). Extracting the information may include consolidating information, aggregating information, and converting between different units of measurement or monetary currencies. Industry metastore information for data marts 502 includes rules to help extract the appropriate information from the data warehouse. Further, aggregate subject data mart module 504 helps determine which information in the data warehouse can be aggregated. For example, daily sales figures can be aggregated by products, customers, and time to reduce the amount of raw data and make the information easier to analyze.

Next, multi-dimensional data tables of information are created from the data marts in accordance with established business rules (step 712). These multi-dimensional data tables are sometimes referred to as "cubes" of information because the information can be analyzed from multiple different dimensions. As previously mentioned, the business rules correspond to business rules established by industry standards groups, governmental bodies, or consortiums. Variables used in these multi-dimensional tables may also depend on the person's role in the company and their business responsibilities. For example, a 3-dimensional data table for a vice president of operations in a company may include variables such as units produced, marginal cost of units produced, and profit margin.

Business rules used to create multi-dimensional data tables are described in industry metric components 602. Industry metric components 602 includes information used to derive industry metric values such as "in transit inventory". The multi-dimensional data table or cube holding the "in transit inventory" metric value would describe the passing of inventory ownership (from either the seller or buyer) as well as information on how the goods are delivered (i.e. ship, train, or plane).

Metric values are then generated from the multi-dimensional data tables that measure business performance (step 714). These metric values summarize large amounts of information from multiple enterprises that an executive or manager can readily measure and track. Using metric values rather than data, managers and executive can quickly assess business performance and take appropriate corrective actions. For example, the manufacturing and distribution industry can measure business performance using metric values such as total inventory value, purchase order stability ratio, supplier order file rate, warehouse inventory accuracy, and customer satisfaction index (i.e. compares various factors in one industry against several other industries). The purchase order stability ratio, for example, indicates over time that a product is purchased consistently and used as planned. These metric values are displayed in accordance with the user interface discussed later herein.

### USER INTERFACE TO METASTORAGE SERVER

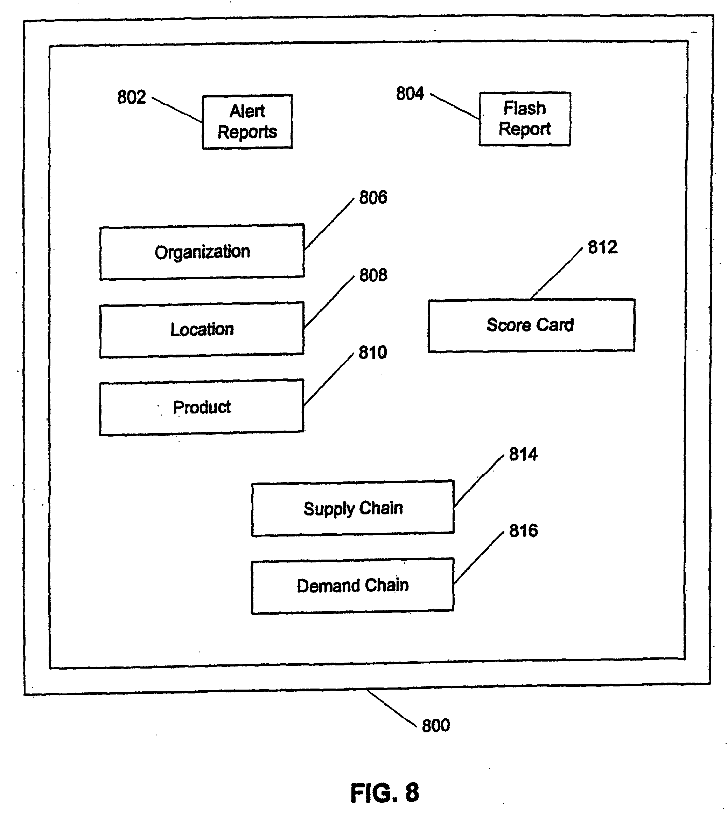

In accordance with the present invention, user interface 203 controls the processing and display of business information on a user's desktop. The user interface can be implemented within a web browser utilizing hypertext markup language (HTML), JavaScript, Java, or other programming languages. FIG. 8 is a block diagram representation of a user interface 800 used to control the display of information associated with metastorage server 114. In accordance with one implementation of the present invention, user interface 800 includes an alert reports indicator 802, a flash report selection 804, an organization selection 806, a location selection 808, a product selection 810, a score card selection 812, a supply chain selection 814, a demand chain selection 816.

Alert reports indicator 802 monitors when a metric value associated with a product or service exceeds or drops below specified limit values. These specified limit values can be set by default or set according to a user's requirements. The metric values are good indicators of overall business activities because they are derived from the business information of multiple enterprises. Alert reports indicator 802 can monitor any one of the many metrics provided in industry metric data 606. For example, metrics used in a manufacturing industry may include monitoring missed shipments, a cash balance alert indicating that a company's cash balance is low, product shortages, and product returns. All these metrics are monitored using alert report 802 because they need to be addressed immediately.

Flash reports selection 804 provides continuous monitoring for a set of metric values. The metric values monitored using flash reports selection 804 are displayed continuously to the user for easier monitoring. The metric values associated with flash reports selection 804 can default to certain values based upon a users role in an enterprise or may be customized to each individual person. For example, a vice president of sales may review metric values relating net profit while a line manager manufacturing products in a factory may review metric values relating to total manufacturing capacity.

Organization selection 806, location selection 808, and product selection 810 provide techniques to isolate portions of an enterprise for analysis. Metric values and other information displayed thereby correspond to the portion of the enterprise selected using these selection items.

Product selection 810 identifies a portion of the enterprise associated with the production of a particular product. For example, selecting production selection 810 may generate a list of products associated with the enterprise. These products can be produced in different geographic areas or from different business units within the same enterprise. The user can select a product from the list and then analyze business metrics within the enterprise associated with the particular product.

Score card selection 812 displays metric values associated with the above selection methods on user interface 203. For example, score card selection 812 will display metric values measured for a particular region or a particular product in the region if the selection methods on user interface 203 have been used to select a product or particular region.

Supply chain selection 814 displays information associated with enterprises "supplying" products and services to create a selected product. Products displayed in the supply chain can also be selected and will display business information and metric values associated with the particular product. Similarly, demand chain selection 816 displays the demand chain of enterprises or products "demanding" a particular product. Enterprises in the demand chain can also be selected to reveal metric values and business information associated with the particular enterprise. These metric values and business information can be used to gauge demand for a product and determine which enterprises are using the product.

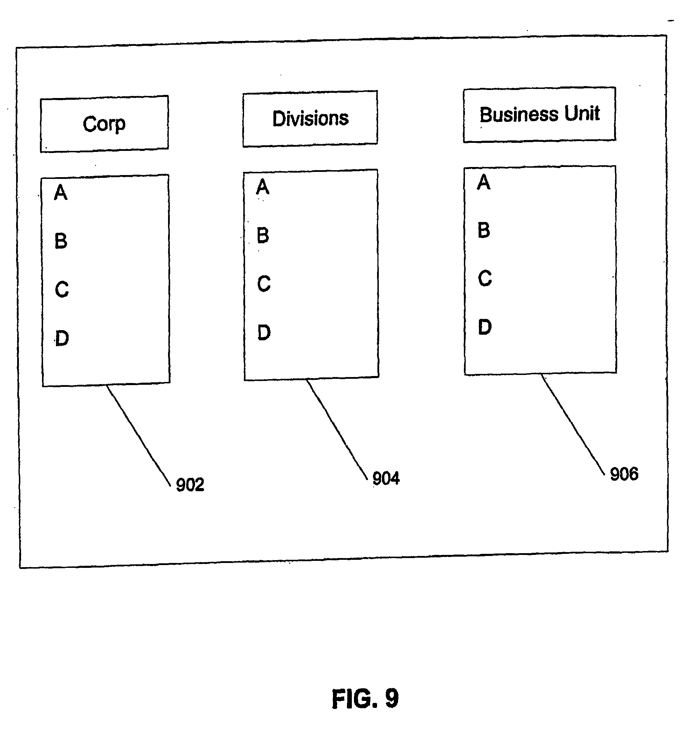

FIG. 9 is a block diagram representation of the selectable elements used by organization selection 806 in FIG. 8 to identify a portion of an enterprise for analysis. These selectable elements on the user interface correspond to a corporate selection 902, a division selection 904, and a business unit selection 906. Corporate selection 902 is used to select different corporate entities within an enterprise; division selection 902 is used to select a division within an enterprise; and business unit selection 906 is used to select a business unit 906 within an enterprise. The terms used to distinguish business divisions within an organization are exemplary and may differ depending on the organization. Consequently, in an alternative embodiment the selection categories corresponding to organization selection 806 may differ from those depicted in FIG. 9 and typically will correspond to the structure of the particular organization.

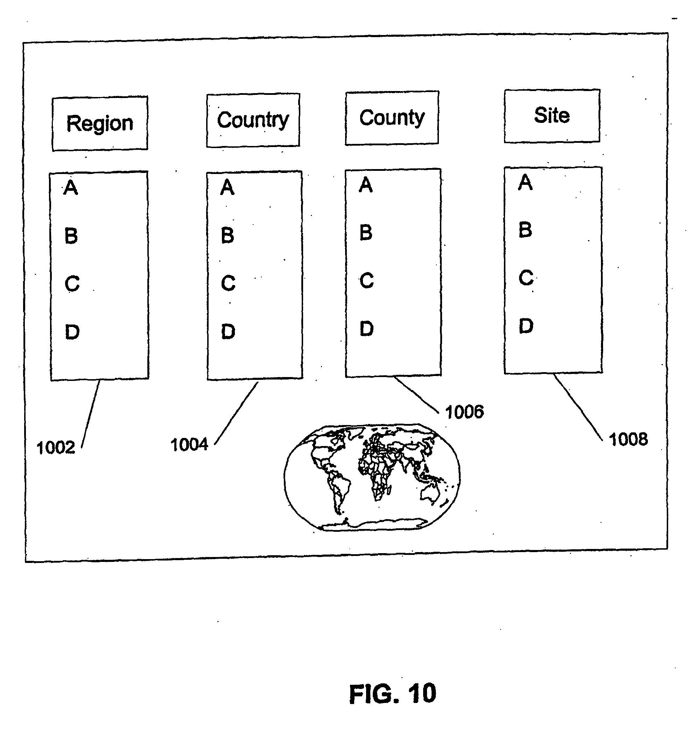

FIG. 10 is a block diagram representation of the selectable elements used to isolate a geographic area for analysis. These selectable elements correspond to location selection 808 on user interface 800 and include a region selection 1002, a country selection 1004, a county selection 1006, and a site selection 1008. Using these location based selections, managers and executives can compare business performance metrics of an enterprise in different geographic areas.

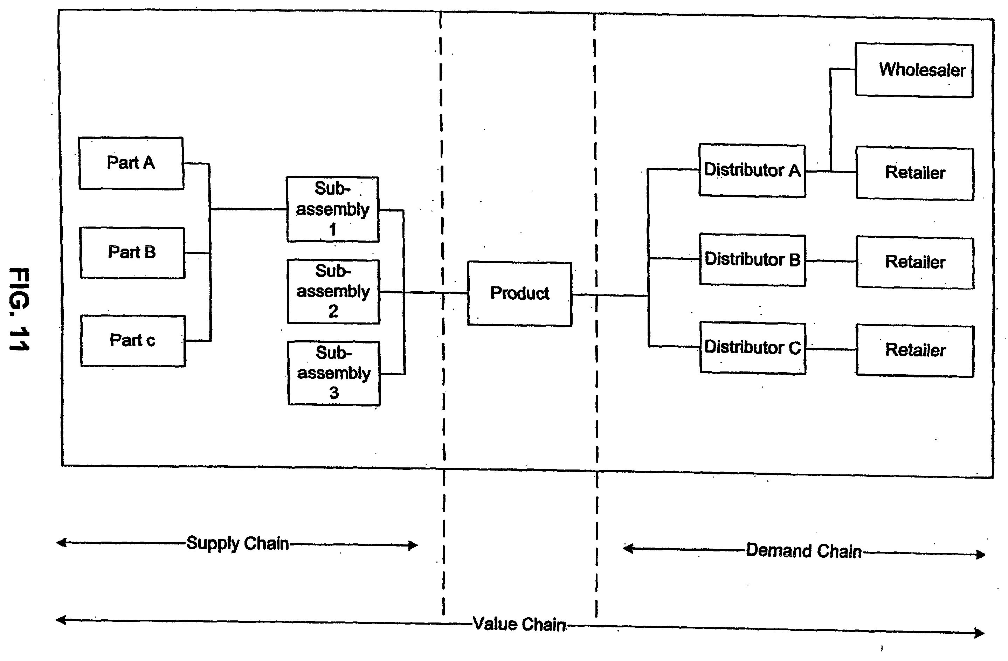

FIG. 11 is a block diagram representation of a value chain displayed in accordance with one implementation of the present invention. The value chain includes a supply chain and a demand chain. Depending on whether a user selects supply chain selection 814 or demand selection 816, corresponding information from either the supply chain or the demand chain portion of the value chain is displayed.

The exemplary supply chain in FIG. 11 shows parts and subassemblies supplied by different enterprises to make a particular product. In this example, selecting a part or subassembly in the supply chain produces additional business information and metric values associated with supplying that particular part or subassembly. Additional business information could include shipping dates, inventory in stock, volume purchase costs, and physical specifications.

The demand chain in FIG. 1 shows distributors, retailers and a wholesaler that demand use of the product. The demand chain operates in a similar manner to the supply chain. For example, selecting a distributor in the supply chain would produce additional business information and metric values associated with the distributor. This information could include volume requirements, desired price, desired shipping arrangements, existing volume purchase arrangements, and physical specifications required for the identified product.

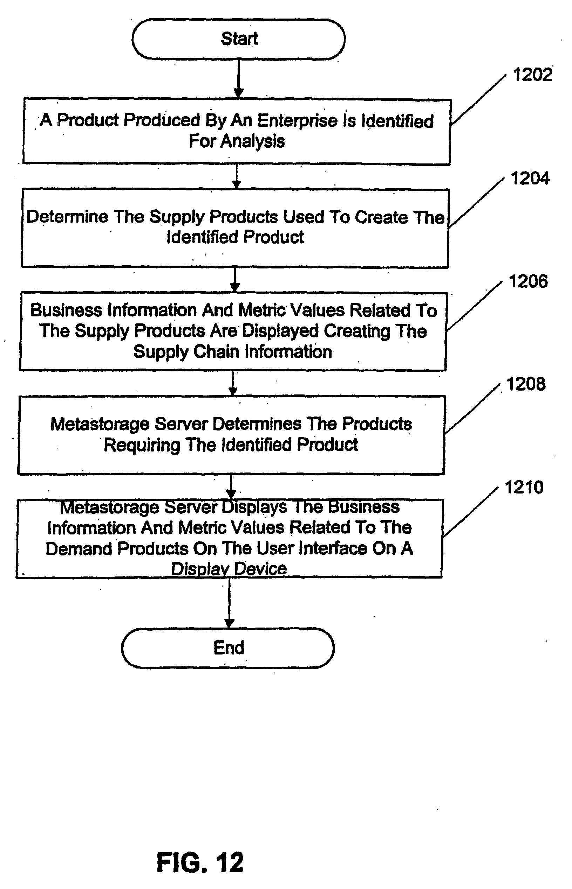

FIG. 12 is a flowchart diagram of the steps used to display a supply chain and demand chain on a user interface in accordance with one implementation of the present invention. Initially, a product is identified in an enterprise for analysis (step 1202). Typically, a user will select a product for analysis. Business information and metric values associated with the identified product can be displayed by selecting the identified product on the user interface.

To display the supply chain of products, metastorage server 114 determines supply products used to create the identified product (step 1204). Often, the identified product is associated with one enterprise and the supply products are associated with another enterprise. Consequently, metastorage server 114 may communicate with metastorage server 126 in accordance with the present invention to receive business information and metric values associated with the supply products. The business information and metric values related to the supply products are then displayed from the supply chain of information (step 1206).

In addition to the supply information, a user may also produce information associated with the demand for the identified product. To identify demand chain information, metastorage server 114 first determines the products and enterprises using or demanding the identified product (step 1208). Metastorage server 114 may communicate with metastorage server 126 to receive business information and metric values associated with the enterprises and products in the demand chain. Once the demand products are identified, metastorage server 114 displays the business information and metric values related to the demand products and enterprises on the user interface.

While specific implementations have been described herein for purposes of illustration, various modifications may be made without departing from the scope of the invention. For example, implementations of the present invention discusses metric values and business information related products however alternate implementations of the present invention could readily be adapted to services or a combination of services and products. Furthermore, although aspects of the present invention are described as being stored in memory and other storage mediums, one skilled in the art will appreciate that these aspects can also be stored on or read from other types of computer-readable media, such as secondary storage devices, like hard disks floppy disks, or CD-ROM; a carrier wave from the Internet; or other forms of RAM or ROM. Accordingly, the invention is not limited to the above described embodiments, but instead is defined by the appended claims in light of their full scope of equivalents.

## Claims

1. A data processing apparatus comprising:
means for receiving business information data from a plurality of sources, said business information data having a number of formats;
a data warehouse (226,234) comprising:
(i) a transform module (226) operable to process received business information data to identify categories for said data and to determine business information data in a neutral format corresponding to said received data; and
(ii) a warehouse database (234) configured to store business information data in a neutral format in association with category data determined by said transform module (226);
a plurality of data marts (220), each of said data marts comprising:
(i) an extraction module operable to select and process data stored in said warehouse database (234); and
(ii) a database configured to store business information data extracted by said extraction module in association with category data;
**characterised by** further comprising:
one or more metric generation modules (218) each of said metric generation modules (218) comprising:
(i) industry metric components (602) defining rules for deriving metric values from data stored in a multiple dimension database (606);
(ii) selection means for selecting data from the databases of a selection of said data marts (220);
(iii)a multiple dimension database (606) configured to store business information data selected by said selection means; and
(iv) processing means for processing business information stored within said multiple dimension database of said metric generation module (218) in accordance with rules defined by said industry metric components (602) to derive and output one or more metric values for said stored business information.

2. A data processing apparatus in accordance with claim 1 wherein said extraction modules each comprise:
a meta data module (221) defining rules for extracting a defined subset of data from said warehouse data base (234); and
means for extracting data from said warehouse data base (234) in accordance with said rules defined by said meta data module (221).

3. A data processing apparatus in accordance with claim 2 wherein said meta data module (221) further comprises data (502-504) defining rules for processing extracted data from said warehouse database (234) wherein said extraction module is operable to process extracted data in accordance with said rules for storing within said database of said data mart (220).

4. A data processing apparatus in accordance with claim 3 wherein said data defining rules for processing are operable to cause said extraction module to process data so as to consolidate data extracted from said warehouse database (234).

5. A data processing apparatus in accordance with any of claims 1 to 4 wherein said selection means of said metric generation modules (218) each comprise a metric meta store content definition (604) defining rules for extracting defined data from said data marts (220), wherein said selection means is operable to select data in accordance with rules defined by said metric meta store content definition (604).

6. A data processing system comprising:
data processing apparatus in accordance with any preceding claim; and
a plurality of user terminals (118, 130) each operable to access the processing means of said metric generation modules (218) wherein individual user terminals are configured to access processing means of selected metric generation modules (218) and receive metric values output by said selected metric generation modules (218).

7. A data processing system in accordance with claim 6 further comprising:
a plurality of information systems (102, 104) each operable to generate business information data; and
a plurality of local transaction systems (120, 110) operable to transmit business information data from said information systems (102, 104) to said means for receiving business information data of said data processing apparatus.

8. A data processing method comprising the steps of:
receiving business information data from a plurality of sources, said business information data having a number of formats;
processing received business information data to identify categories for said data and to determine business information data in a neutral format corresponding to said received data;
storing determined business information data in a neutral format in association with category data in a warehouse database (234);
extracting and processing selected data stored in said warehouse database (234);and
storing processed business information data extracted from said warehouse database (234) in a plurality of data marts (220);
**characterised by** further comprising the steps of:
storing industry metric components (602) defining rules for deriving metric values from data stored in a multiple dimension database (606);
selecting data from a selection of said data marts (220);
storing said selected data in a said multiple dimension database (606); and
processing data stored in said multidimensional database (606) in accordance with rules defined by said industry metric components (602) to derive and output one or more metric values for said stored business information.

9. A method in accordance with claim 8 wherein said extraction step comprise the steps of:
storing a meta data module (221) defining rules for extracting a defined subset of data from said warehouse data base (234); and
extracting data from said warehouse data base (234) in accordance with said rules defined by said meta data module (221).

10. A method in accordance with claim 9 wherein extraction step further comprises the steps of:
storing data (502-504) defining rules for processing extracted data from said warehouse database (234); and
storing data processed in accordance with said defined rules in said data mart (220).

11. A method in accordance with claim 10 wherein processing of data comprises consolidating data extracted from said warehouse database (234).

12. A method in accordance with any of claims 8 to 11 wherein said selection step comprises:
storing a metric meta store content definition (604) defining rules for extracting defined data from said data marts (220); and
selecting data in accordance with rules defined by said metric meta store content definition (604).

13. A method in accordance with any of claims 8 - 12 further comprising:
providing a plurality of user terminals (118, 130) and accessing said multidimensional database utilising said user terminals, wherein individual user terminals are configured to receive selected output metric values.

14. A method in accordance with claim 13 further comprising the step of:
generating business information data utilising a plurality of information systems (102, 104).

15. A storage medium storing computer implementable process steps to cause a programable computer to become configured as a data processing apparatus in accordance with any of claims 1-5 or to perform a method in accordance with any of claims 8-12.

16. A storage medium in accordance with claim 15 comprising a computer disc.

17. A storage medium in accordance with claim 15 comprising a carrier wave on a network.

## Patentansprüche

1. Datenverarbeitungsgerät mit:
einer Einrichtung zum Empfangen von Geschäftsinformationsdaten von mehreren Quellen, wobei die Geschäftsinformationsdaten eine Mehrzahl von Formaten aufweisen;
einem Daten-Lagerhaus (226, 234) mit:
(i) einem Transformationsmodul (226) das zum Verarbeiten der empfangenen Geschäftsinformationsdaten betreibbar ist, um Kategorien für die Daten zu identifizieren und Geschäftsinformationsdaten in einen neutralen Format entsprechend der empfangenen Daten zu bestimmten; und
(ii) einer Lagerhaus-Datenbank (234), die dazu ausgelegt ist, Geschäftsinformationsdaten in einem neutralen Format unter Zuordnung von durch das Transformationsmodul (226) bestimmten Kategoriedaten zu speichern;
mehreren Datenmärkten (220), die jeweils aufweisen:
(i) ein Extraktionsmodul, das zum Auswählen und Verarbeiten der in der Lagerhaus-Datenbank (234) gespeicherten Daten betreibbar ist; und
(ii) eine Datenbank, die zum Speichern von durch das Extraktionsmodul extrahierten Geschäftsinformationsdaten unter Zuordnung zu Kategoriedaten ausgelegt ist;
**gekennzeichnet durch**:
mindestens ein metrisches Erzeugungsmodul (218), wobei jedes metrische Erzeugungsmodul (218) aufweist:
(i) industriemetrische Komponenten (602), die Regeln zum Ableiten metrischer Werte aus in einer mehrdimensionalen Datenbank (606) gespeicherten Daten definiert;
(ii) eine Auswahleinrichtung zum Auswählen von Daten aus den Datenbanken einer Auswahl der Datenmärkte (220);
(iii) eine mehrdimensionale Datenbank (606), die zum Speichern von **durch** die Auswahleinrichtung ausgewählten Geschäftsinformationsdaten ausgelegt ist; und
(iv) eine Verarbeitungseinrichtung zum Verarbeiten von in der mehrdimensionalen Datenbank des metrischen Erzeugungsmoduls (218) gespeicherten Geschäftsinformationen gemäß den **durch** die industriemetrischen Komponenten (602) definierten Regeln, um mindestens einen metrischen Wert für die gespeicherten Geschäftsinformationen abzuleiten und auszugeben.

2. Datenverarbeitungsgerät nach Anspruch 1, wobei die Extraktionsmodule jeweils aufweisen:
ein Metadatenmodul (221), das Regeln zum Extrahieren einer definierten Untermenge von Daten aus der Lagerhaus-Datenbank (234) definiert; und
einer Einrichtung zum Extrahieren von Daten aus der Lagerhaus-Datenbank (234) gemäß den durch das Metadatenmodul (221) definierten Regeln.

3. Datenverarbeitungsgerät nach Anspruch 2, wobei das Metadatenmodul (221) ferner Daten (502-504) aufweist, die Regeln zum Verarbeiten von aus der Lagerhaus-Datenbank (234) extrahierten Daten definieren, und das Extraktionsmodul dazu ausgelegt ist, die extrahierten Daten gemäß der Regeln zum Speichern innerhalb der Datenbank des Datenmarkts (220) zu verarbeiten.

4. Datenverarbeitungsgerät nach Anspruch 3, wobei die Datenverarbeitungsregeln definierenden Daten dazu verwendbar sind, das Extraktionsmodul zum Verarbeiten der Daten zu Veranlassen, um aus der Lagerhaus-Datenbank (234) extrahierte Daten zu konsolidieren.

5. Datenverarbeitungsgerät nach einem der Ansprüche 1 bis 4, wobei die Auswahleinrichtung des metrischen Erzeugungsmoduls (218) jeweils eine metrische Metaspeicher-Inhaltsdefinition (604) aufweist, die Regeln zum Extrahieren definierter Daten aus den Datenmärkten (220) definieren, und die Auswahleinrichtung zum Auswählen von Daten gemäß den durch die metrische Metaspeicher-Inhaltsdefinition (604) definierten Regeln betreibbar ist.

6. Datenverarbeitungssystem mit:
einem Datenverarbeitungsgerät nach einem der vorstehenden Ansprüche; und
mehreren Benutzerterminals (118, 130), die jeweils zum Zugreifen auf die Verarbeitungseinrichtung der metrischen Erzeugungsmodule (218) betreibbar sind, wobei einzelne Benutzerterminals zum Zugreifen auf die Verarbeitungseinrichtung ausgewählter metrischer Erzeugungsmodule (218) und zum Empfangen metrischer Werte, die durch die ausgewählten metrischen Erzeugungsmodule (218) ausgegeben wurden, ausgelegt sind.

7. Datenverarbeitungssystem nach Anspruch 6, ferner mit:
mehreren Informationssystemen (102, 104), die jeweils zum Erzeugen von Geschäftsinformationsdaten betreibbar sind; und
mehreren lokalen Transaktionssystemen (120, 110), die zum Übertragen von Geschäftsinformationsdaten von den Informationssystemen (102, 104) zu der Einrichtung zum Empfangen von Geschäftsinformationsdaten des Datenverarbeitungsgeräts betreibbar sind.

8. Datenverarbeitungsverfahren, in dem:
Geschäftsinformationsdaten von mehreren Quellen empfangen werden, wobei die Geschäftsinformationsdaten eine Mehrzahl von Formaten aufweisen;
die empfangenen Geschäftsinformationsdaten verarbeitet werden, um Kategorien für die Daten zu identifizieren und Geschäftsinformationsdaten in einem neutralem Format entsprechend der empfangenen Daten zu bestimmen;
die bestimmten Geschäftsinformationsdaten in einem neutralen Format unter Zuordnung von Kategoriedaten in einer Lagerhaus-Datenbank (234) gespeichert werden;
ausgewählte, in der Lagerhaus-Datenbank (234) gespeicherte Daten extrahiert und verarbeitet werden; und
verarbeitete, aus der Lagerhaus-Datenbank (234) extrahierte Geschäftsinformationsdaten, in mehreren Datenmärkten (220) gespeichert werden;
**dadurch gekennzeichnet, daß**:
industriemetrische Komponenten (602) gespeichert werden, die Regeln zum Ableiten von metrischen Werten aus in einer mehrdimensionalen Datenbank (606) gespeicherten Daten definieren;
Daten aus einer Auswahl der Datenmärkte (220) ausgewählt werden;
die ausgewählten Daten in der mehrdimensionalen Datenbank (606) gespeichert werden; und
in der mehrdimensionalen Datenbank (606) gespeicherte Daten gemäß der durch die industriemetrischen Komponenten (602) definierten Regeln verarbeitet werden, um mindestens einen metrischen Wert für die gespeicherten Geschäftsinformationen abzuleiten und auszugeben.

9. Verfahren nach Anspruch 8, wobei in dem Extraktionsschritt ferner:
ein Metadatenmodul (221) gespeichert wird, das Regeln zum Extrahieren einer definierten Untermenge von Daten aus der Lagerhaus-Datenbank (234) definiert; und
Daten aus der Lagerhaus-Datenbank (234) gemäß den durch das Metadatenmodul (221) definierten Regeln extrahiert werden.

10. Verfahren nach Anspruch 9, wobei in dem Extraktionsschritt ferner:
Daten (502-504) gespeichert werden, die Regeln zum Verarbeiten von aus der Lagerhaus-Datenbank (234) extrahierten Daten definieren; und
gemäß der in dem Datenmarkt (220) definierten Regeln verarbeitete Daten gespeichert werden.

11. Verfahren nach Anspruch 10, wobei die Datenverarbeitung das Konsolidieren von aus der Lagerhaus-Datenbank (234) extrahierten Daten einschließt.

12. Verfahren nach einem der Ansprüche 8 bis 11, wobei in dem Auswählschritt:
eine metrische Metaspeicher-Inhaltsdefinition (604) gespeichert wird, die Regeln zum Extrahieren definierter Daten aus den Datenmärkten (220) definiert; und
Daten gemäß der durch die metrische Metadaten-Inhaltsdefinition (604) definierten Regeln ausgewählt werden.

13. Verfahren nach einem der Ansprüche 8 bis 12, wobei ferner:
mehrere Benutzerterminals (118, 130) vorgesehen werden und auf die mehrdimensionale Datenbank unter Verwendung der Benutzerterminals zugegriffen wird, wobei einzelne Benutzerterminals zum Empfangen ausgewählter metrischer Ausgabewerte ausgelegt sind.

14. Verfahren nach Anspruch 13, wobei ferner:
Geschäftsinformationsdaten unter Verwendung mehrerer Informationssysteme (102, 104) erzeugt werden.

15. Speichermedium zum Speichern computerimplementierbarer Verfahrensschritte, die bewirken, daß ein programmierbarer Computer als ein Datenverarbeitungsgerät gemäß einem der Ansprüche 1 bis 5 konfiguriert ist oder ein Verfahren gemäß einem der Ansprüche 8 bis 12 ausführt.

16. Speichermedium gemäß Anspruch 15 mit einer Computerplatte.

17. Speichermedium gemäß Anspruch 15 mit einer Trägerwelle an einem Netzwerk.

## Revendications

1. Dispositif de traitement de données comprenant :
un moyen destiné à recevoir des données d'information de gestion provenant d'une pluralité de sources, lesdites données d'information de gestion ayant un certain nombre de formats ;
une centrale de données (226, 234) comprenant :
(i) un module (226) de transformation utilisable pour traiter des données d'information de gestion reçues pour identifier des catégories pour lesdites données et pour déterminer des données d'information de gestion dans un format neutre correspondant auxdites données reçues ; et
(ii) une base de données (234) de centrale de données configurée pour mémoriser des données d'information de gestion dans un format neutre en association avec des données de catégories déterminées par ledit module (226) de transformation ;
une pluralité de formations de données (220), chacune desdites formations de données comprenant :
(i) un module d'extraction utilisable pour choisir et traiter des données mémorisées dans ladite base de données (234) de centrale de données ; et
(ii) une base de données configurée pour mémoriser des données d'information de gestion extraites par ledit module d'extraction en association avec des données de catégories ;
**caractérisé en ce qu'**il comprend en outre :
un ou plusieurs modules (218) générateurs de métriques, chacun desdits modules (218) générateurs de métriques comprenant :
(i) des composants (602) de métrique industrielle définissant des règles pour obtenir des valeurs de métrique à partir de données mémorisées dans une base de données multidimensionnelle (606) ;
(ii) un moyen de choix destiné à choisir des données à partir des bases de données d'un choix desdites formations de données (220) ;
(iii) une base de données multidimensionnelle (606) configurée pour mémoriser des données d'information de gestion choisies par ledit moyen de choix ; et
(iv) un moyen de traitement destiné à traiter de l'information de gestion mémorisée dans ladite base de données multidimensionnelle dudit module (218) générateur de métriques d'après des règles définies par lesdits composants (602) de métrique industrielle pour obtenir et pour sortir une ou plusieurs valeurs de métrique pour ladite information de gestion mémorisée.

2. Dispositif de traitement de données selon la revendication 1, dans lequel lesdits modules d'extraction comprennent chacun :
un module (221) de métadonnées définissant des règles pour extraire un sous-ensemble défini de données de ladite base de données (234) de centrale de données ; et
un moyen destiné à extraire des données de ladite base de données (234) de centrale de données en fonction desdites règles définies par ledit module (221) de métadonnées.

3. Dispositif de traitement de données selon la revendication 2, dans lequel ledit module (221) de métadonnées comprend en outre des données (502 à 504) définissant des règles pour traitement de données extraites de ladite base de données (234) de centrale de données, dans lequel ledit module d'extraction est utilisable pour traiter des données extraites en fonction desdites règles pour mémorisation à l'intérieur de ladite base de données de ladite formation de données (220).

4. Dispositif de traitement de données selon la revendication 3, dans lequel lesdites données définissant des règles pour traitement sont utilisables pour faire que ledit module d'extraction traite des données de façon à consolider des données extraites de ladite base de données (234) de centrale de données.

5. Dispositif de traitement de données selon l'une quelconque des revendications 1 à 4, dans lequel ledit moyen de choix desdits modules (218) générateurs de métriques comprennent chacun une définition (604) de contenu de métamémoire de métrique définissant des règles pour extraire des données définies desdites formations de données (220), dans lequel ledit moyen de choix est utilisable pour choisir des données en fonction des règles définies par ladite définition (604) de contenu de métamémoire de données.

6. Système de traitement de données comprenant :
un dispositif de traitement de données selon l'une quelconque des revendications précédentes ; et
une pluralité de terminaux (118, 130) d'utilisateur chacun utilisable pour accéder au moyen de traitement desdits modules (218) générateurs de métriques, dans lequel les terminaux individuels d'utilisateur sont configurés pour accéder au moyen de traitement de modules (218) générateurs de métriques choisis et pour recevoir des valeurs de métrique sorties par lesdits modules (218) générateurs de métriques choisis.

7. Système de traitement de données selon la revendication 6, comprenant en outre :
une pluralité de systèmes (102, 104) d'information, chacun utilisable pour engendrer des données d'information de gestion ; et
une pluralité de systèmes locaux (120, 110) de transaction utilisable pour transmettre des données d'information de gestion desdits systèmes (102, 104) d'information audit moyen destiné à recevoir des données d'information de gestion dudit dispositif de traitement de données.

8. Procédé de traitement de données comprenant les étapes :
de réception de données d'information de gestion provenant d'une pluralité de sources, lesdites données d'information de gestion ayant un certain nombre de formats ;
de traitement de données d'information de gestion reçues pour identifier des catégories pour lesdites données et pour déterminer des données d'information de gestion dans un format neutre correspondant auxdites données reçues ;
de mémorisation de données d'information de gestion dans un format neutre en association avec des données de catégories d'une base de données (234) de centrale de données ;
d'extraction et de traitement de données choisies mémorisées dans ladite base de données (234) de centrale de données ; et
de mémorisation de données d'information de gestion traitées, extraites de ladite base de données (234) de centrale de données dans une pluralité de formation de données (220) ;
**caractérisé en ce qu'**il comprend en outre les étapes :
de mémorisation de composants (602) de métrique industrielle définissant des règles pour obtenir des valeurs de métrique à partir de données mémorisées dans une base de données multidimensionnelle (606) ;
de choix de données à partir d'un choix desdites formations de données (220) ;
de mémorisation de données choisies dans ladite base de données multidimensionnelle (606) ; et
de traitement de données mémorisées dans ladite base de données multidimensionnelle (606) d'après des règles définies par lesdits composants (602) de métrique industrielle pour obtenir et pour sortir une ou plusieurs valeurs de métrique pour ladite information de gestion mémorisée.

9. Procédé selon la revendication 8, dans lequel ladite étape d'extraction comprend les étapes :
de mémorisation d'un module (221) de métadonnées définissant des règles pour l'extraction d'un sous-ensemble défini de données de ladite base de données (234) de centrale de données ; et
d'extraction de données de ladite base de données (234) de centrale de données d'après lesdites règles définies par ledit module (221) de métadonnées.

10. Procédé selon la revendication 9, dans lequel l'étape d'extraction comprend en outre les étapes :
de mémorisation de données (502 à 504) définissant des règles pour le traitement de données extraites de ladite base de données (234) de centrale de données ; et
de mémorisation de données traitées d'après lesdites règles définies, dans ladite formation de données (220).

11. Procédé selon la revendication 10, dans lequel le traitement de données comprend la consolidation de données extraites de ladite base de données (234) de centrale de données.

12. Procédé selon l'une quelconque des revendications 8 à 11, dans lequel ladite étape de choix comprend :
la mémorisation d'une définition (604) de contenu de métamémoire de métriques définissant des règles pour extraire des données définies desdites formations de données (220) ; et
le choix de données d'après des règles définies par ladite définition (604) de contenu de métamémoire de métriques.

13. Procédé selon l'une quelconque des revendications 8 à 12 comprenant en outre :
le fait de prévoir une pluralité de terminaux (118, 130) d'utilisateur et l'accès à ladite base de données multidimensionnelle en utilisant lesdits terminaux d'utilisateur, dans lequel les terminaux individuels d'utilisateur sont configurés pour recevoir des valeurs de métrique sorties choisies.

14. Procédé selon la revendication 13, comprenant en outre les étapes :
de production de données d'information de gestion en utilisant une pluralité de systèmes (102, 104) d'information.

15. Support de mémorisation mémorisant des étapes de traitement pouvant être mises en oeuvre en ordinateur pour faire qu'un ordinateur programmable soit configuré comme un dispositif de traitement de données selon l'une quelconque des revendications 1 à 5 ou pour mettre en oeuvre un procédé selon l'une quelconque des revendications 8 à 12.

16. Support de mémorisation selon la revendication 15, comprenant un disque d'ordinateur.

17. Support de mémorisation selon la revendication 15, comprenant une onde porteuse sur un réseau.
